# EUROPÄISCHE PATENTSCHRIFT

(11) **EP 1 805 876 B1**
(45) Veröffentlichungstag und Bekanntmachung des Hinweises auf die Patenterteilung: **11.01.2017**
(21) Anmeldenummer: 05784606.5
(22) Anmeldetag: 25.08.2005
(51) Int. Cl.: B29C 45/14, B29C 45/00, H02K 1/30, H02K 1/04, H02K 3/34, H02K 15/10

(54) **VERFAHREN ZUM UMSPRITZEN EINES ANKERS FÜR ELEKTRISCHE MASCHINEN**
METHOD FOR SHEATHING AN ARMATURE FOR ELECTRIC MACHINES
PROCEDE POUR EXTRUDER UN ANCRAGE POUR DES MACHINES ELECTRIQUES

(30) Priorität: 22.10.2004 DE 102004051462
(43) Veröffentlichungstag der Anmeldung: 11.07.2007
(73) Patentinhaber: ROBERT BOSCH GMBH, 70442 Stuttgart (DE)
(72) Erfinder: NEUBAUER, Achim, 76547 Sinzheim-Vormberg (DE); CHAUMET, Pascal, F-67500 Hagenau (FR); ALTMEYER, Dirk, 77815 Buehl (DE); HUBER, Helmut, 77855 Achern (DE)
(86) Internationale Anmeldenummer: PCT/EP2005/054185
(87) Internationale Veröffentlichungsnummer: WO 2006/045656

(56) Entgegenhaltungen:
- DE-A1- 19 610 736
- DE-C1- 19 543 919
- US-A- 4 263 711

## Beschreibung

### Stand der Technik

Die Erfindung geht aus von einem Verfahren zum Umspritzen eines Ankers für elektrische Maschinen nach dem Oberbegriff des Anspruchs 1. Bei diesem Verfahren wird ein Nuten für Ankerwicklungen aufweisendes Lamellenpaket mit einer Bohrung auf eine Ankerwelle gesteckt und durch das Umspritzen zumindest mit einer Nutisolation versehen. Der Kunststoff fließt durch Kanälen, die entlang der Bohrung des Lamellenpakets und der Oberfläche der Ankerwelle verlaufen.

Anker von permanentmagneterregten Elektrokleinmotoren besitzen Blechpakete aus Einzellamellen bzw. einbaufertige Lamellenpakete die auf den entsprechenden Ankerwellen auf verschiedene Weisen fixiert werden. Neben Fixierungen durch plastische Verformung (z.B. DE 19933037 A), durch Bolzen (s. FR 2644947), durch Aufpressen auf gerändelte Ankerwellen etc sind auch Fixierungen durch Anspritzungen an den Enden oder Umspritzung bekannt Bei Umspritzungen in Heisskanaltechnik sind heute z-B. mit PAA6.6 minimale Nutisolations-Wandstärken von 0,4 bis 0,7 mm auf etwa 30-40 mm Lamellenpaketlänge in Großserie möglich.

Außerdem sind Stanzpakete mit Bohrungen zur Kühlung (z.B. JP 2000152527) bzw. für die Spritzung einer Nutisolation als Durchführungskanäle des Spritzkunststoffes bekannt (DE 19543919 C1 US 4263711, DE 19610736 A1).

Die Lamellengeometrie hängt ab von fertigungstechnischen Belangen wie Verknüpfbarkeit, Ausrichtbarkeit und dem magnetischen Fluss (z.B. JP 2003164080 oder JP 2002165392).

### Vorteile der Erfindung

Das erfindungsgemäße Verfahren zum Umspitzen eines Ankers für elektrische Maschinen mit den Merkmalen des Anspruchs 1 hat den Vorteil einer technischen Umsetzung der Fixierung und Nutisolation des Lamellenpakets eines Ankers eines wirkungsgradoptimierten Elektrokleinmotors bzw. einer elektrischen Maschine, wobei die Nutisolation im Nutgrund gleichzeitig eine minimale Schichtdicke für derartige Umspritzungen aufweist, um maximale Kupferfüllungen zu ermöglichen. Hierzu ist ein Verfahren zum Umspritzen eines Ankers für elektrische Maschinen vorgesehen, bei dem ein von einem Joch (34) radial abstehende Polzähne und durch die Polzähne jeweils paarweise hinterschnittene Nuten für Ankerwicklungen aufweisendes Lamellenpaket mit einer Bohrung auf eine Ankerwelle gesteckt wird und durch das Umspritzen zumindest mit einer Nutisolation versehen wird. Der durch die Kanäle, die entlang der Bohrung des Lamellenpakets und der Oberfläche der Ankerwelle verlaufen, fließende Kunststoff wird dabei nur an einer ersten Stirnseite des Lamellenpakets eingespritzt, und fließt von dieser ersten Stirnseite in die Nuten sowie durch die Kanäle, nachdem er auf der zweiten Stirnseite aus den Kanälen austritt. Von der zweiten Stirnseite her tritt der Kunststoff in die Nuten ein und fließt mit dem von der ersten Stirnseite kommenden Kunststoff zusammen. Erfindungsgemäß ist vorgesehen, dass die Kanäle in radialer Verlängerung der Mitte der Polzähne und zu dieser Mitte symmetrisch angeordnet sind, wobei die Zahl der Kanäle abhängig von der Zahl der Polzähne derart gewählt ist, dass genügend Kontaktfläche zur Ankerwelle verbleibt, um diese bei der magnetischen Flussführung teilhaben zu lassen. Besonders vorteilhaft ist diesbezüglich eine Minimierung des Bereichs mit maximaler magnetischer Sättigung im Jochbereich, der sich auf der Außenkontur jeweils einer halben Ellipse von einem Kanal zu den zwei benachbarten Kanälen bewegt. Darüber hinaus erlaubt die ausreichende Kontaktfläche zur im Allgemeinen ebenfalls aus Eisenbasiswerkstoffen bestehenden Ankerwelle das Erreichen eines maximalen Flusses bzw. einer minimalen Sättigung bei maximal verbleibendem Wickelraum für die Kupferdrähte der Wicklung.

Vorzugsweise fließt der Kunststoff ausgehend von der ersten Stirnseite schneller durch die Kanäle als durch die Nuten. Dadurch werden die Nuten recht gleichmäßig mit Kunststoff gefüllt.

Besonders vorteilhaft ist die Verwendung des Kunststoffes PAA6.6, da sich dieser besonders für Kraftstoffpumpen eignet.

In einer vorteilhaften Weiterbildung wird das Umspritzen in abfallloser Direktanspritzung durchgeführt. Außerdem ist es besonders vorteilhaft, wenn das Umspritzen in Heißkanaltechnik durchgeführt wird.

Vorzugsweise wird das Maß der Spritzgussform in Bezug auf den Abstand der Stirnseiten des Lamellenpakets so eingestellt, dass bei einem hersteflungsbedingten maximalen Abstand auf jeder Stirnseite eine Kunststöffschicht von wenigstens 0,2 mm erzeugt wird. Dadurch können fertigungstechnisch leicht die Längentoleranzen des Lamellenpakets beherrscht werden. Ein durchschnittlicher Anker weist dadurch jeweils an einem Ende eine deutlich dickere Nutisolationsschicht auf, als an anderen Stellen der Nutisolation.

In einer bevorzugten Weiterbildung wird das Lamellenpaket durch die Umspritzung auf der Ankerwelle fixiert. Die Ankerwelle kann hierfür je nach geforderter Arretierungskraft des Paketes auf der Ankerwelle entweder glatt sein, gerändelt oder kann spezielle Arretierungsflächen wie zum Beispiel Abflachungen aufweisen.

Mit dem erfindungsgemäßen Herstellungsverfahren sind im Gegensitz zu üblichen Herstellungsverfahren Anker mit Nutisolationen von 0,25 bis 0,4 mm Dicke, vorzugsweise 0,3 mm, möglich. Außerdem ermöglicht dies eine Lamellengeometrie eines Elektromotors, z.B. einer Kraftstoffpumpe, die geeignet ist, eine minimal dünne Nutisolation für den verwendeten Spritzwerkstoff durch abfallloses Umspritzen in Heißkanaltechnik herzustellen und das Lamellenpaket dabei auf der Ankerwelle zu fixieren.

Auch ist die gleichzeitig die Lamellengeometrie bzgl. des magnetischen Flusses optimiert, da die zur Fixierung und als Flusshilfen notwendigen Jochaussparungen für die Nutisolationsumspritzung jeweils unterhalb des jeweiligen Zahnschafts liegen, die Zahngeometrie hinsichtlich maximaler Kupferfüllfaktoren ausgelegt ist und die Jochstärke und Zahnhalsbreite so angepasst ist, dass an keiner Stelle des Lamellenbleches eine magnetische Übersättigung auftritt. Hierzu ist der Abstand der Kanäle zu den jeweils benachbarten Nutgründen im Vergleich zu dem Abstand benachbarter Nute so groß, dass an keiner Stelle des Lamellenpakets eine magnetische Sättigung eintritt. Vorzugsweise ist der Abstand der Kanäle zu den jeweils benachbarten Nutgründen im Wesentlichen gleich dem Abstand benachbarter Nute, so dass vorzugsweise an keiner Stelle des Lamellenpakets eine magnetische Sättigung eintritt.

In einer vorteilhaften Weiterbildung verläuft die Umspritzung über die Stirnseiten des Lamellenpakets hinaus entlang der Ankerwelle. Dies ist vorteilhaft, wenn eine definierte Kante für eine nachfolgende Vollumspritzung des Ankers erzeugt werden soll, die dann dort eine Abdichtung direkt auf der Welle ermöglicht.

Weitere Vorteile und vorteilhafte Weiterbildungen ergeben sich aus den Unteransprüchen und der Beschreibung.

### Zeichnung

Ein Ausführungsbeispiel ist in der Zeichnung dargestellt und in der nachfolgenden Beschreibung näher erläutert. Es zeigen Figur 1 eine elektrische Maschine in einem Längsschnitt, Figur 2 einen unbewickelten Anker in einem Längsschnitt und die Figuren 3a, 3b, 3c sowie 3d abgewandelte Anker im Querschnitt.

### Beschreibung des Ausführungsbeispiels

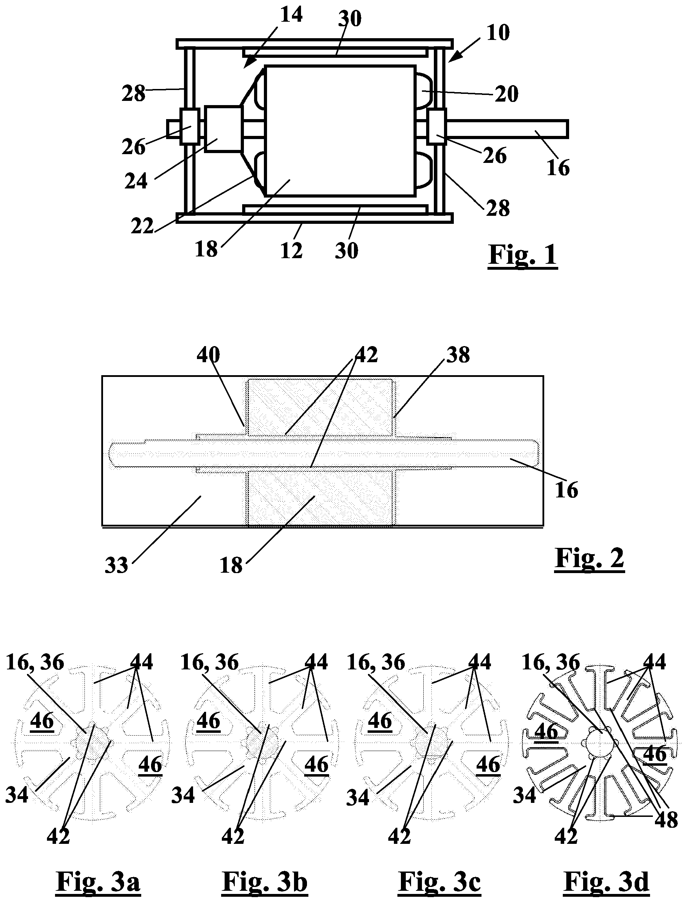

In der Figur 1 ist ein Teil einer elektrischen Maschine 10 in einem Längsschnitt vereinfacht dargestellt. Im vorliegenden Ausführungsbeispiel handelt es sich um einen bürstenbehafteten Gleichstrommotor, auch Kommutatormotor genannt, und Teil einer Kraftstoffpumpe eines Kraftfahrzeugs ist. Es sind jedoch andere Anwendungen beispielsweise in einem Lüfter, Fensterheber, Wischerantrieb, Sitzversteller oder sonstigen Anwendungen in einem Kraftfahrzeug denkbar. Es kann sich aber auch um einen Generator handeln. Die elektrische Maschine 10 hat vorzugsweise nur eine Drehrichtung, weshalb sie besonders für den bereits erwähnten Lüfterantrieb bestimmt ist. Auch aufgrund der niedrigen Geräusche ist die elektrische Maschine 10 am besten für einen Lüfterabtrieb geeignet.

In der elektrischen Maschine 10 ist auf der Ankerwelle für den Fall, dass es sich um einen bürstenbehafteten Gleichstrommotor handelt, ein Kommutator angeordnet. Im Falle eines Generators wäre dies ein Schleifring.

Die elektrische Maschine 10 umfasst ein Gehäuse, insbesondere ein Polrohr 12, und einen darin angeordneten Anker 14. Der Anker 14 weist eine Ankerwelle 16 und ein Lamellenpaket 18 mit einer Ankerwicklung 20 auf. Die Ankerwicklung 20 ist über Drähte 22 mit Haken eines Kommutators 24 verbunden. Die Drähte 22 der Ankerwicklung 20 sind um die Haken geschlungen und mit diesen heißverpresst. Der Kommutator 24 wird von zwei nicht dargestellten Kohlebürsten bzw. Bürsten beaufschlagt. Die Bürsten sind auf einem ebenfalls nicht dargestellten Bürstenhalter angeordnet, der als Kunststoffspritzgussteil hergestellt ist. Die Ankerwelle 16 ist in zwei stirnseitigen Lagern 26 angeordnet, die in ihrerseits in zwei Lagerdeckeln 28 befestigt sind. Schließlich sind am Innenumfang des Polrohrs 12 um das Lamellenpaket 18 herum Magnete 30 angeordnet.

In der Figuren 2 und 3a ist der Anker 14 detaillierter in einer angedeuteten Spritzgussform 33 (Figur 2) dargestellt. Das Lamellenpaket 18 umfasst ein ringförmiges Joch 34 mit einer Bohrung 36, mit dem das Lamellenpaket auf die Ankerwelle 16 gesteckt ist. Entlang der Bohrung 36 verlaufen von einer ersten Stirnseite 38 zu einer zweiten Stirnseite 40 des Lamellenpakets 18 nutförmige Kanäle 42. Die nutförmigen Kanäle 42 können aber auch alternativ oder zusätzlich am Außenumfang der Ankerwelle 16 verlaufen. Vom Joch 34 stehen radiale Polzähne 44 ab, die jeweils paarweise hinterschnittene Nuten 46 begrenzen. Die Nuten 46, die Stirnseiten 38, 40 sind mit einer Kunststoffschicht, vorzugsweise PAA6.6 bedeckt. Die Dicke der Nutisolation 48 (Figur 3d), mit der zumindest die Nuten 46 versehen sind, beträgt 0,25 bis 0,4 mm, vorzugsweise 0,3 mm, wobei dies fertigungsbedingte Toleranzen von 0,05 mm umfasst.

Der Abstand der Kanäle 42 zu den jeweils benachbarten Nutgründen ist im Vergleich zu dem Abstand benachbarter Nute 46 bzw. der Dicke der Polzähne 44 so groß, dass an keiner Stelle des Lamellenpakets 18 eine magnetische Sättigung eintritt. Vorzugsweise ist der Abstand der Kanäle 42 zu den jeweils benachbarten Nutgründen im Wesentlichen gleich dem Abstand benachbarter Nute 46 bzw. gleich der Dicke der Polzähne 44, so dass vorzugsweise an keiner Stelle des Lamellenpakets eine magnetische Sättigung eintritt. Der Durchmesser der Kanäle 42 im Lamellenquerschnitt hängt vom verwendeten Spritzwerkstoff ab, insbesondere von dessen Fließfähigkeit im Spritzzustand - LCP ist beispielsweise deutlich leichtflüssiger als PAA6.6, ist dafür aber z.B. für Anwendungen in Kraftstoffen ungeeignet - und von der notwendigen Arretierungskraft auf der Ankerwelle 16.

Die Umspritzung reicht entlang der Ankerwelle 16 über die Stirnseiten 38, 40 des Lamellenpakets 18 hinaus. Die Ankerwelle 16 kann glatt (Figur 3a), gerändelt (Figur 3b) oder mit wenigstens einer Abflachung (Figur 3c) versehen sein.

Die Lamellengeometrie mit den entsprechenden Kanälen 42 zur Ankerwelle 16 hin ist bzgl. des magnetischen Flusses derart optimiert, dass bei einem statisch anliegenden magnetischen Feld magnetische Sättigung auch im Jochbereich weitgehend vermieden wird. Hierzu sind die Kanäle 42 in radialer Verlängerung der Mitte der Polzähne 44 gelegt und zu dieser Mitte symmetrisch. Durch diese Anordnung wird der Bereich mit maximaler magnetischer Sättigung im Jochbereich, der sich auf der Außenkontur jeweils einer halben Ellipse von einem Kanal 42 zu den zwei benachbarten Kanälen 42 bewegt, minimiert, da er in den Bereich maximalen Breite der jochnahen Lamellengeometrie gelegt wird und den Wickelraum der Nuten 46 im inneren Bereich weit zur Welle hin offen lässt. Außerdem ist die Zahl der Kanäle 42 abhängig von der Zahnzahl derart gewählt, dass genügend Kontaktfläche zur Ankerwelle 16 bleibt, um diese, da sie im Allgemeinen ebenfalls aus Eisenbasiswerkstoffen besteht, bei der magnetischen Flussführung teilhaben zu lassen und so insgesamt maximalen Fluss bzw. minimale Sättigung bei maximalem verbleibendem Wickelraum für die Kupferdrähte zu erreichen. Die minimale abfalllos gespritzte Nutisolationsschicht sorgt für minimalen Wickelraumverlust durch die notwendige vollkommene Isolation und fördert somit zusätzlich die Optimierung hinsichtlich höherer Wirkungsgrade. Für einen Kraftstoffpumpenantrieb mit erfmdungsgemäßer Geometrie, der mit PAA6.6 in abfalllosem Direktanspritzverfahren nutisolationsumspritzt wird, liegt die Schichtdicke in Großserie (> 1 Mio./a) etwa bei 200 bis max. 300 µm und damit um mehr als 50 µm unter den heute aus nicht abfallfreien Umspritzungen bekannten Dicken. Um den Wickelraum weiter zu vergrößern, kann überdies die Zahnhalsbreite der Lamelle so weit verringert werden bis der Fluss ähnlich hoch ist wie in den Bereichen maximalen Flusses über den Spritzkanalöffnungen im Jochbereich.

Beim Umspritzen wird der Anker 14 durch das Umspritzen zumindest mit einer Nutisolation versehen. Der Kunststoff wird nur im Bereich einer Stirnseite 38 eingespritzt. Von der Stirnseite 38 fließt der Kunststoff von der ersten Stirnseite 38 in die Nuten 46 sowie durch die Kanäle 40. Vorzugsweise fließt der Kunststoff ausgehend von der ersten Stirnseite 38 schneller durch die Kanäle 42 als durch die Nuten 46. Nachdem der Kunststoff auf der zweiten Stirnseite aus den Kanälen 42 austritt, tritt er von der zweiten Stirnseite 40 her in die Nuten ein und fließt mit dem von der ersten Stirnseite 38 kommenden Kunststoff zusammen. Das Umspritzen wird in der abfalllosen Direktanspritzung durchgeführt. Außerdem erfolgt das Umspritzen in Heißkanaltechnik. Ferner wird das Lamellenpaket 18 durch die Umspritzung auf der Ankerwelle 14 fixiert.

Das Maß der Spritzgussform wird in Bezug auf den Abstand der Stirnseiten 38, 40 des Lamellenpakets 18 ist so eingestellt, dass bei einem toleranzbedingten maximalen Abstand auf jeder Stirnseite 38, 40 eine Kunststoffschicht von wenigstens 0,2 mm, vorzugsweise 0,3 mm erzeugt wird.

Durch die gesamtheitliche Betrachtung und Optimierung der Fixierung des Lamellenpakets, der wirkungsgradoptimierten Auslegung des Lamellenquerschnitts, der Nutisolation und der Verwendung des Prozesses einer abfalllosen Direktanspritzung in Heißkanaltechnik als Fertigungsverfahren, ergeben sich Optimierungsschritte, die im Gesamten zu den beschriebenen Lamellengeometrien und Nutisolationsschichtgeometrien führen und in Großserie durch entsprechende Direktanspritzverfahren mit hoher Prozesssicherheit und Qualität kostengünstiger umgesetzt werden können, als bei bekannten Ankergeometrien und Fertigungsverfahren.

Die erfindungsgemäßen Einzelmaßnahmen wirken vor allem in der Gesamtheit und unter dem fertigungstechnischen Aspekt, dass das Heißkanaldirektumspritzen wesentliche Vorteile gegenüber bekannten alternativen Verfahren, wie Pulverbeschichtungsverfahren, Aufschieben fertiger Kunststoffkappen, oder Abfall behafteten Heißkanalspritzverfahren, Papierisolation usw. hat. Um diese Vorteile, wie z.B. Wegfall von Nachbearbeitungsschritten (Abscheren von Spritzkanälen, Überdrehen, Reinigen etc.), Vermeidung von Stoffabfällen, geringere Verschmutzungen (z.B. durch Pulver) höhere Prozesssicherheit u.a., fertigungsseitig zu nutzen und gleichzeitig mit minimalen Durchmesser des Rotors (um z.B. hydraulische Verluste klein zu halten, die mit der Drehzahl stark ansteigen) und minimaler Ankerlänge (um z.B. minimale Einbauhöhen für Kraftstoffpumpenmodule zu erreichen) den Wirkungsgrad z.B. eines unter Kraftstoff (bzw. Flüssigkeiten) betriebenen Elektrokleinmotors zu optimieren, bedarf es der erfindungsgemäßen Kombination von geometrischen Optimierungen der Lamellenquerschnitte, der Mitnutzung des Wellenmaterials zur Flussführung und einer minimalen Nutisolationsschichtdicke vor allem in den Hohlräumen zwischen den Zähnen, um damit maximal mögliche Wickelräume für die Kupferdrähte zu generieren. Die Größe des Wickelraumes erlaubt erst die volle Nutzung des möglichen Flusses und damit die optimale Ausnutzung der elektrischen Energie durch die Drähte für die magnetisch induzierte Drehung des Ankers und den Wirkungsgrad des Motors bei gleichzeitig kostenoptimierter Fertigungstechnologie hinsichtlich der Fixierung des Lamellenpaketes auf der Ankerwelle, hinsichtlich der Nutisolation, hinsichtlich Toleranzen der Paketlänge und hinsichtlich der Abfallvermeidung und Sauber- wie Prozesssicherheit.

## Patentansprüche

1. Verfahren zum Umspritzen eines Ankers (14) für elektrische Maschinen (10), bei dem ein von einem Joch (34) radial abstehende Polzähne (44) und durch die Polzähne (44) jeweils paarweise hinterschnittene Nuten (46) für Ankerwicklungen (20) aufweisendes Lamellenpaket (18) mit einer Bohrung (36) auf eine Ankerwelle (16) gesteckt wird und durch das Umspritzen zumindest mit einer Nutisolation (48) versehen wird, wobei Kunststoff durch Kanäle (42) fließt, die entlang der Bohrung (36) des Lamellenpakets (18) und der Oberfläche der Ankerwelle (16) verlaufen, und wobei der Kunststoff nur an einer ersten Stirnseite (38) des Lamellenpakets (18) eingespritzt wird, von dieser ersten Stirnseite (38) in die Nuten (46) sowie durch die Kanäle (42) fließt und, nachdem der Kunststoff auf der zweiten Stirnseite (40) aus den Kanälen (42) austritt, von der zweiten Stirnseite (40) her in die Nuten (46) eintritt und mit dem von der ersten Stirnseite (38) kommenden Kunststoff zusammenfließt, **dadurch gekennzeichnet, dass** die Kanäle (42) in radialer Verlängerung der Mitte der Polzähne (44) und zu dieser Mitte symmetrisch angeordnet sind, wobei die Zahl der Kanäle (42) abhängig von der Zahl der Polzähre (44) derart gewählt ist, dass genügend Kontaktfläche zur Ankerwelle (16) verbleibt, um diese bei der magnetischen Flussführung teilhaben zu lassen.

2. Verfahren nach Anspruch 1, **dadurch gekennzeichnet, dass** der Kunststoff ausgehend von der ersten Stirnseite (38) schneller durch die Kanäle (42) fließt als durch die Nuten (46).

3. Verfahren nach Anspruch 1 oder 2, **dadurch gekennzeichnet, dass** als Kunststoff PAA66 verwendet wird.

4. Verfahren nach einem der vorhergehenden Ansprüche, **dadurch gekennzeichnet, dass** das Umspritzen in abfallloser Direktanspritzung und/oder in Heißkanaltechnik durchgeführt wird.

5. Verfahren nach einem der vorhergehenden Ansprüche, **dadurch gekennzeichnet, dass** das Maß der Spritzgussform in Bezug auf den Abstand der Stirnseiten (38, 40) des Lamellenpakets (18) so eingestellt wird, dass bei einem herstellungsbedingten maximalen Abstand auf jeder Stirnseite (38, 40) eine Kunststoffschicht von wenigstens 0,2 mm erzeugt wird.

6. Verfahren nach einem der vorhergehenden Anspruche, **dadurch gekennzeichnet, dass** das Lamellenpaket (18) durch die Umspritzung auf der Ankerwelle (16) fixiert wird.

7. Anker (14) hergestellt nach dem Verfahren nach einem der vorhergehenden Ansprüche, **dadurch gekennzeichnet, dass** die Nutisolation (48) eine Dicke von 0,25 bis 0,4 mm hat, vorzugsweise 0,3 mm.

8. Anker (14) nach Anspruch 7, **dadurch gekennzeichnet, dass** der Abstand der Kanäle (42) zu den jeweils benachbarten Nutgründen im Vergleich zu dem Abstand benachbarter Nute (46) so groß ist, dass an keiner Stelle des Lamellenpakets (18) eine magnetische Sättigung eintritt.

9. Anker (14) nach Anspruch 7 oder 8, **dadurch gekennzeichnet, dass** der Abstand der Kanäle (42) zu den jeweils benachbarten Nutgründen im Wesentlichen gleich dem Abstand benachbarter Nute (46) ist, so dass vorzugsweise an keiner Stelle des Lamellenpakets (18) eine magnetische Sättigung eintritt.

10. Anker (14) nach einem der Ansprüche 7 bis 9, **dadurch gekennzeichnet, dass** die Umspritzung über die Stirnseiten (38, 40) des Lamellenpakets (18) hinaus entlang der Ankerwelle (16) verläuft.

11. Anker (14) nach einem der Ansprüche 7 bis 10, **dadurch gekennzeichnet, dass** die Ankerwelle glatt, gerändelt oder mit wenigstens einer Abflachung versehen ist.

12. Elektrische Maschine (10) mit einem Anker (14) nach einem der vorhergehenden Ansprüche 7 bis 11.

13. Kraftstoffpumpe mit einer elektrischen Maschine (10) nach Anspruch 12.

## Claims

1. Method for encapsulating an armature (14) for electrical machines (10) by injection moulding, in which method a laminate stack (18), which has pole teeth (44) which protrude radially from a yoke (34) and has slots (46), which are undercut by the pole teeth (44) in each case in pairs, for the armature windings (20), is mounted onto an armature shaft (16) by way of a bore (36) and is provided at least with a slot insulation (48) by virtue of the encapsulation by injection moulding, wherein plastic flows through channels (42) which run along the bore (36) of the laminate stack (18) and the surface of the armature shaft (16), and wherein the plastic is injected only at a first end side (38) of the laminate stack (18), flows from this first end side (38) into the slots (46) and also through the channels (42) and, after the plastic emerges from the channels (42) onto the second end side (40), enters the slots (46) from the second end side (40) and coalesces with the plastic arriving from the first end side (38), **characterized in that** the channels (42) are arranged in a radial extension of the centre of the pole teeth (44) and symmetrically in relation to this centre, wherein the number of channels (42) is selected depending on the number of pole teeth (44) in such a way that a sufficient amount of contact area, in relation to the armature shaft (16) remains in order to allow said armature shaft to participate in the magnetic flux guidance.

2. Method according to Claim 1, **characterized in that** the plastic, starting from the first end side (38), flows more rapidly through the channels (42) than through the slots (46).

3. Method according to Claim 1 or 2, **characterized in that** the plastic used is PAA66.

4. Method according to one of the preceding claims, **characterized in that** the encapsulation by injection moulding is carried out with waste-free direct gating and/or using hot runner technology.

5. Method according to one of the preceding claims, **characterized in that** the dimensions of the injection mould with respect to the distance between the end sides (38, 40) of the laminate stack (18) is set such that a plastic layer of at least 0.2 mm is produced given a manufacturing-related maximum distance on each end side (38, 40).

6. Method according to one of the preceding claims, **characterized in that** the laminate stack (18) is fixed on the armature shaft (16) by virtue of the encapsulation by injection moulding.

7. Armature (14) produced in accordance with the method according to one of the preceding claims, **characterized in that** the slot insulation (48) has a thickness of from 0.25 to 0.4 mm, preferably of 0.3 mm.

8. Armature (14) according to Claim 7, **characterized in that** the distance of the channels (42) from the respectively adjacent slot bases in comparison to the distance between adjacent slots (46) is so great that magnetic saturation does not occur at any point on the laminate stack (18).

9. Armature (14) according to Claim 7 or 8, **characterized in that** the distance of the channels (42) from the respectively adjacent slot bases is substantially equal to the distance between adjacent slots (46), so that magnetic saturation preferably does not occur at any point on the laminate stack (18).

10. Armature (14) according to one of Claims 7 to 9, **characterized in that** the encapsulation by injection moulding runs beyond the end sides (38, 40) of the laminate stack (18) along the armature shaft (16).

11. Armature (14) according to one of Claims 7 to 10, **characterized in that** the armature shaft is smooth, knurled or provided with at least one flattened portion.

12. Electrical machine (10) comprising an armature (14) according to one of the preceding Claims 7 to 11.

13. Fuel pump comprising an electrical machine (10) according to Claim 12.

## Revendications

1. Procédé pour gainer par extrusion un induit (14) pour des machines électriques (10), dans lequel un paquet feuilleté (18) présentant des dents polaires (44) saillantes radialement d'une armature (34) et des rainures (46) pour des enroulements d'induit (20) formées respectivement par paires en contre-dépouille par les dents polaires (44) est engagé avec un alésage (36) sur un arbre d'induit (16) et est muni par le gainage par extrusion d'au moins une isolation de rainures (48), dans lequel une matière plastique coule à travers des canaux (42), qui s'étendent le long de l'alésage (36) du paquet feuilleté (18) et de la surface de l'arbre d'induit (16), et dans lequel la matière plastique n'est injectée qu'à un premier côté frontal (38) du paquet feuilleté (18), s'écoule à partir de ce premier côté frontal (38) dans les rainures (46) ainsi qu'à travers les canaux (42) et, après que la matière plastique sorte des canaux (42) sur le deuxième côté frontal (40), entre à partir du deuxième côté frontal (40) dans les rainures (46) et rejoint la matière plastique venant du premier côté frontal (38), **caractérisé en ce que** les canaux (42) sont disposés dans le prolongement radial du milieu des dents polaires (44) et symétriquement par rapport à ce milieu, dans lequel le nombre des canaux (42) est choisi en fonction du nombre des dents polaires (44), de telle manière qu'il reste suffisamment de surface de contact avec l'arbre d'induit (16) pour que celui-ci puisse participer à la conduite du flux magnétique.

2. Procédé selon la revendication 1, **caractérisé en ce que** la matière plastique s'écoule à partir du premier côté frontal (38) plus rapidement à travers les canaux (42) qu'à travers les rainures (46).

3. Procédé selon la revendication 1 ou 2, **caractérisé en ce que** l'on utilise comme matière plastique du PAA66.

4. Procédé selon l'une quelconque des revendications précédentes, caractérisé en ce l'on effectue le gainage par extrusion par injection directe sans déchets et/ou par une technique à canaux chauffants.

5. Procédé selon l'une quelconque des revendications précédentes, **caractérisé en ce que** la dimension du moule de coulée par injection est réglée, par rapport à la distance entre les côtés frontaux (38, 40) du paquet feuilleté (18), de telle manière que lors d'une distance maximale imposée par la fabrication une couche de matière plastique d'au moins 0,2 mm soit produite sur chaque côté frontal (38, 40).

6. Procédé selon l'une quelconque des revendications précédentes, **caractérisé en ce que** le paquet feuilleté (18) est fixé sur l'arbre d'induit (16) par le gainage par extrusion.

7. Induit (14) fabriqué par le procédé selon l'une quelconque des revendications précédentes, **caractérisé en ce que** l'isolation des rainures (48) présente une épaisseur de 0,25 à 0,4 mm, de préférence de 0,3 mm.

8. Induit (14) selon la revendication 7, **caractérisé en ce que** la distance des canaux (42) aux fonds de rainures respectivement voisins par comparaison avec la distance de rainures voisines (46) a une grandeur telle qu'il ne se produise une saturation magnétique en aucun endroit du paquet feuilleté (18).

9. Induit (14) selon la revendication 7 ou 8, **caractérisé en ce que** la distance des canaux (42) aux fonds de rainures respectivement voisins est essentiellement égale à la distance de rainures voisines (46), de telle manière qu'il ne se produise une saturation magnétique de préférence en aucun endroit du paquet feuilleté (18).

10. Induit (14) selon l'une quelconque des revendications 7 à 9, **caractérisé en ce que** le gainage par extrusion s'étend le long de l'arbre d'induit (16) au-delà des côtés frontaux (38, 40) du paquet feuilleté (18).

11. Induit (14) selon l'une quelconque des revendications 7 à 10, **caractérisé en ce que** l'arbre d'induit est lisse, moleté ou muni d'au moins un méplat.

12. Machine électrique (10) avec un induit (14) selon l'une quelconque des revendications 7 à 11.

13. Pompe à carburant avec une machine électrique (10) selon la revendication 12.
